(19) Europäisches Patentamt
European Patent Office
Office européen des brevets

(11) **EP 3 609 169 B1**

(12) **EUROPEAN PATENT SPECIFICATION**

(45) Date of publication and mention
of the grant of the patent:
**19.05.2021 Bulletin 2021/20**

(51) Int Cl.:
*H04M 3/56* *(2006.01)*          *H04R 25/00* *(2006.01)*
*G10L 25/78* *(2013.01)*

(21) Application number: **18187528.7**

(22) Date of filing: **06.08.2018**

(54) **MULTI-TALKER AUDIO TRANSMISSION SYSTEM AND METHOD**

MULTI-TALKER-AUDIOÜBERTRAGUNGSSYSTEM UND -VERFAHREN

SYSTÈME ET PROCÉDÉ DE TRANSMISSION AUDIO MULTI-INTERLOCUTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2020 Bulletin 2020/07**

(73) Proprietor: **Sonova AG**
**8712 Stäfa (CH)**

(72) Inventors:
• **Balande, William**
**1700 Fribourg (FR)**

• **El-Hoiydi, Amre**
**2000 Neuchâtel (CH)**
• **Cerny, Robert**
**8400 Wintherthur (CH)**

(74) Representative: **Schwan Schorer & Partner mbB**
**Patentanwälte**
**Bauerstraße 22**
**80796 München (DE)**

(56) References cited:
**WO-A1-2008/074350      WO-A1-2017/157443**

EP 3 609 169 B1

**Description**

The disclosure relates to a wireless multi-talker audio system comprising a plurality of audio signal transmission devices and at least one audio receiver device.

For improving audio quality at the receiver devices, a multi-talker network ("MTN") may be provided with a mechanism for selecting the transmission device(s) which is/are allowed to transmit its/their audio signals to the transmission device. Typically, the transmission devices are provided with microphones for capturing an audio signal from the voice of the person who is presently using the transmission device.

WO 2008/074350 A1 relates to a MTN wherein according to one example the transmission devices are given priority according to a "first come" principle, wherein once a certain one of the transmission devices has been enabled to transmit via a wireless link, it will be allowed to continue until the respective user has stopped speaking. Alternatively, or in addition each of the transmission devices may be awarded a certain priority, with a transmission device whose user is determined to presently speak is allowed to transmit its audio signal only if none of the other transmission devices having the same or a higher priority has detected that the user of that transmission device is presently speaking. According to one example, one of the transmission devices acts as a master device which is the only device which transmits an audio signal directly to the receiver devices, while the slave transmission devices transmit their audio signals to the master transmission device via a "daisy chain", with the master transmission device relaying the audio signals received from the slave transmission devices to the receiver devices. The master transmission device may mix the received audio signals with each other and/or with audio signals captured by the master transmission device.

US 2012/0314890 A1 relates to a MTN wherein a plurality of transmission devices sends the captured audio signals to a relay device which mixes the received audio signals and relays the mixed audio signals to the receiver devices.

US 5,966,639 relates to a MTN, wherein some of the transmission devices may act as a mixer device for mixing audio signals received from another one of the transmission units with captured audio signals prior to transmission to the receiver devices. According to another example, the transmission units transmit the captured audio signals to a mixer device, which mixes the received audio signals prior to relaying it to the audio receiver devices.

US 9,635,482 B2 relates to a wireless microphone system comprising an in-ear monitor unit, wherein mixing of a local audio signal with a wirelessly received audio signal occurs in the in-ear monitor or in a mixing desk unit.

US 2017/0235544 A1 relates to a communication system for enabling chatting between computer gamers, wherein a plurality of control devices is connected by wires for exchanging audio signals, wherein local audio signals may be mixed with audio signals received from another control device and wherein the mixed audio signals may be provided to a headset via a wireless link.

It is an objective of the disclosure to provide for a wireless multi-talker audio system which enables improved audio quality. It is a further objective to provide for a method of operating such system.

According to the invention, these objectives are achieved by a method as defined in claim 1 and a system as defined in claim 14, respectively.

A transmission device may either take a mixer role, in which a remote audio signal wirelessly received from another transmission device is mixed with its captured local audio signal prior to transmission of the mixed audio signal to the at least one receiver device, or it may take a chained-talker role, in which it sends its captured local audio signal to a transmission device which takes the mixer role. The chained-talker role and the mixer role are dynamically assigned to the transmission devices based on at least an analysis of the captured local audio signals.

Thereby the best audio quality can be awarded to the presently most important audio signal, since the local audio signal captured by a transmission device in the mixer role is directly transmitted to the receiver device and therefore is received with a higher audio quality, compared to the local audio signal captured by a transmission device in the chained-talker role which is received by the receiver device via the transmission device in the mixer role. According to one example, the analysis of the captured local audio signals comprises applying voice activity detection to the audio signals wherein the mixer role is assigned to the most recent transmission device for which voice activity has been detected and still is being detected, and wherein the chained-talker role is assigned to transmission devices only for which voice activity is presently being detected. For transmission devices for which no voice activity is presently being detected, the chained-talker role and the mixer role are disabled.

In other words, in this example only the captured local audio signals of transmission devices for which voice activity is presently being detected are considered for audio signal transmission, and, in case that at a time for more than one transmission device voice activity is being detected, that transmission device for which voice activity has been detected most recently and still is detected will be assigned the mixer role.

According to one example, the mixer role is assigned to a transmission device for which voice activity is newly detected after expiry of a transition period. During the transition period the chained-talker role is assigned to the transmission device for which voice activity is newly detected, while the transmission device which had been assigned the mixer role before keeps the mixer role.

For example, the duration of the transition period may be determined based on a classification of the local audio signal captured by the transmission device for which voice activity is newly detected at the starting point of the transition period and the local audio signal captured by the transmission device which remains in the mixer role during the transition period. Such analysis may include noise analysis, so that role switching may occur under "noisy" conditions during which artefacts are less audible. Thereby artefacts caused by role switching can be reduced.

Some embodiments are defined in the dependent claims.

Examples of the disclosure are illustrated by reference to the drawings, wherein:

Fig. 1 is a schematic representation of an example of a first transmission device assuming a mixer role and a second transmission device assuming a chained-talker role;

Fig. 2 is a block diagram of an example of a transmission device to be used in an MTN-system;

Fig. 3 is a schematic representation of an example of an MTN-system in a first configuration;

Fig. 4 is a schematic representation of the system of Fig. 3, wherein, however, the configuration has been reversed with regard to the mixer role;

Fig. 5 is a schematic representation of an example of how the mixer role is dynamically assumed by different transmission devices; and

Fig. 6 is a schematic representation of an example of the audio signal classes which may be used for determining an appropriate point in time for role switching.

The drawings have not necessarily been drawn to scale. Similarly, some components and/or operations may be separated into different blocks or combined into a single block for the purposes of discussion of some of the embodiments of the disclosure. Moreover, while the disclosure is amenable to various modifications and alternative forms, specific embodiments have been shown by way of example in the drawings and are described in detail below. The intention, however, is not to limit the disclosure to the particular embodiments described. On the contrary, the disclosure is intended to cover all modifications and alternatives failing within the scope of the invention as defined by the appended claims.

The techniques introduced here can be embodied as special-purpose hardware (e.g., circuitry), as programmable circuitry appropriately programmed with software and/or firmware, or as a combination of special-purpose and programmable circuitry. Hence, embodiments not covered by the claimed invention may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), magneto-optical disks, ROMs, random access memories (RAMs), erasable programmable read-only memories (EPROMs), electrically erasable programmable read-only memories (EEPROMs), magnetic or optical cards, flash memory, or other type of media / machine-readable medium suitable for storing electronic instructions. In some implementations, the machine-readable medium is non-transitory computer readable medium, where in non-transitory excludes a propagating signal. An "audio input" of a device as used hereinafter may be any component integrated within the device and capable of capturing audio signals or any interface of the device capable of receiving an audio signal from a component connected to the interface and capable of capturing audio signals. The component capable of capturing audio signals may be, for example, a microphone or an arrangement of at least two microphones, and the interface may be, for example, a wireless interface or an interface for a wired connection, such as an audio jack socket.

As used hereinafter, a "role" of device is to be understood such that the device assuming the role operates in a mode providing for the device functionality associated with the role.

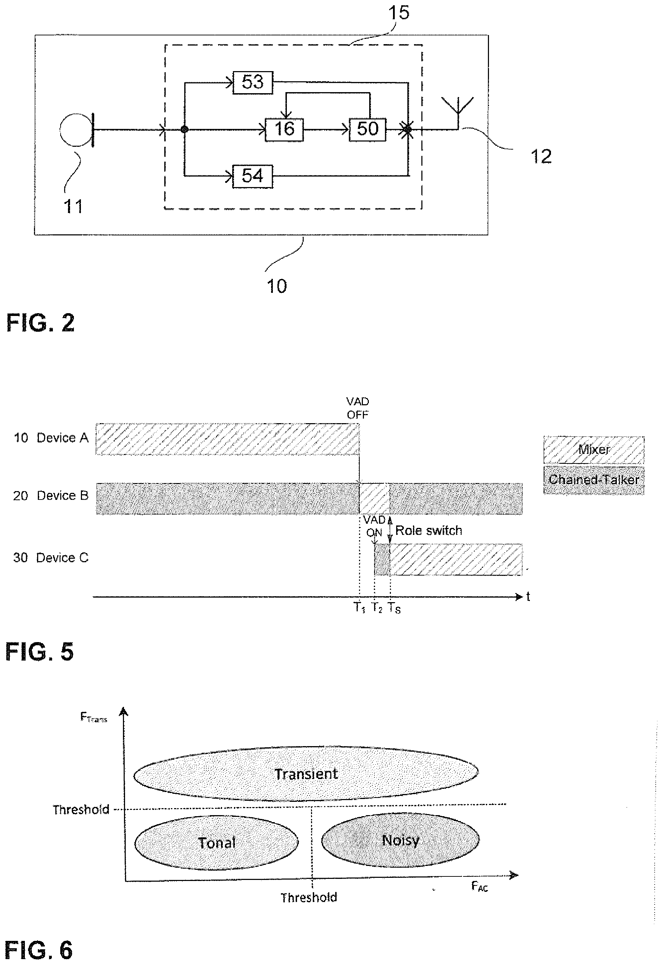

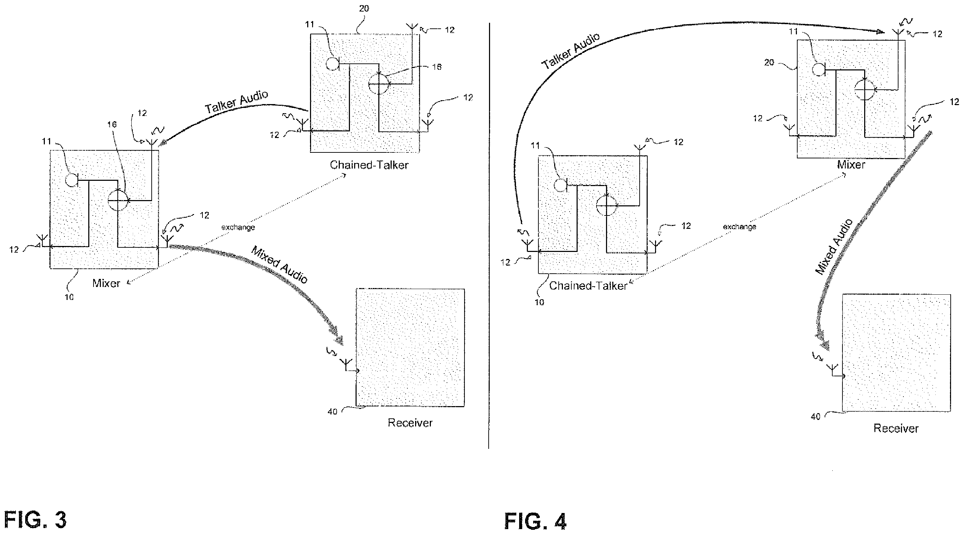

In Figs. 3 and 4 an example of a multi-talker system is shown schematically which comprises a first audio signal transmission device 10, a second audio signal transmission device 20 and an audio signal receiver device 40. Each audio signal transmission device (see also block diagram of transmission device 10 in Fig. 2) comprises a microphone arrangement 11 for capturing a local audio signal from a speaker's voice, a wireless transceiver 12 for transmitting the captured local audio signal to another one of the transmission devices via a wireless link 13 and for receiving an audio signal from at least one of the other transmission devices via the wireless link 13, and an audio signal processing unit 15 for processing the local audio signals captured by the microphone arrangement 11 and the remote audio signals received via the transceiver 12. The audio signal processing unit 15 includes a mixer 16 for mixing the captured local audio signal and the received remote audio signals to obtain a mixed audio signal. The transceiver 12 is also used for transmitting the mixed audio signal via a wireless link 18 to the at least one receiver device 40. It is to be noted that in Figs. 3 and 4 the transceiver 12 is shown in a three-fold manner for illustrating the various functions of the transceiver 12, while the transceiver 12 physically may be implemented as a single device.

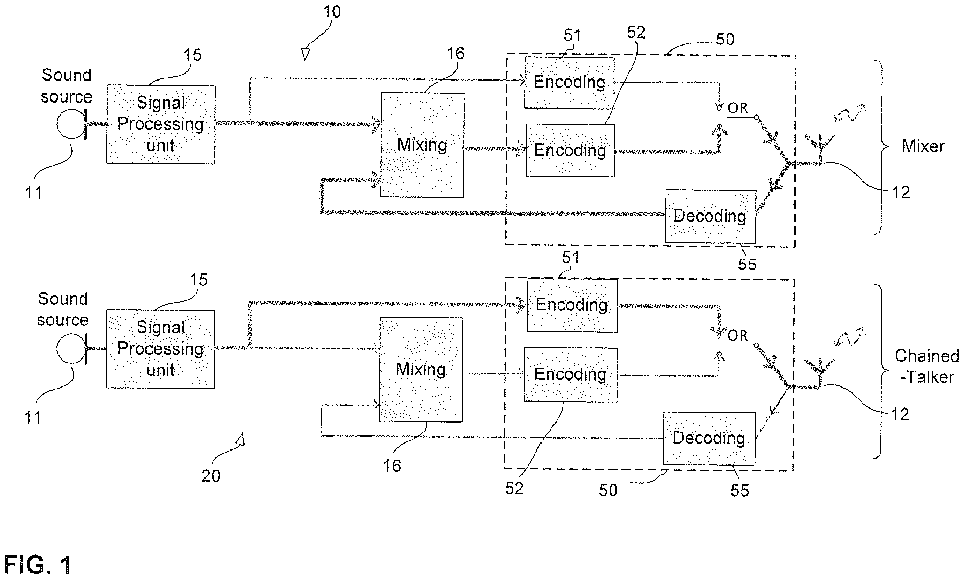

The audio signal processing unit 15 applies a gain model and includes an audio encoder/decoder 50 comprising two parallel encoding instances 51, 52 a decoding instance 55(see also Fig. 1). The audio signal processing unit 15 also comprises a voice activity detector ("VAD") 53 for detecting voice activity in the local audio signal captured by the microphone arrangement 11, so as to detect whether the person using the respective transmission unit is presently speaking or not, and a noise analysis unit 54 for analyzing the audio signal captured by the microphone arrangement 11.

According to one example, the transmission devices 10, 20 may be wireless microphones, such as lapel microphones or microphones which are worn at the chest on a loop around the user's neck. According to another example, the transmission devices could comprises hearing instruments. The multi-talker system may comprise transmission devices of different types. The at least one receiver device may comprise, for example headsets, earphones and hearing instruments, It is to be understood that, like in the case of hearing instruments, the transmission devices or some of the transmission devices could include the receiver functionality of the receiver devices or vice versa, thereby acting as an audio signal transceiver device.

In the example shown in Figs. 1 and 3, the transmission device 10 operates in a mixer role and the transmission device 20 operates in a chained-talker role. In this state of the multi-talker system, the transmission device 20 transmits the local audio signal captured by its microphone arrangement 11, after processing in the audio signal processing unit 15 and audio encoding in the encoder/decoder 50, via the transceiver 12 to the transmission device 10 which receives the transmitted audio signal as a remote audio signal at its receiver 14, decodes it in the encoder/decoder 50 and mixes it in the mixer 16 with the local audio signal captured by the microphone arrangement 11. The mixed audio signal may be processed and is encoded by the encoder/decoder 50 prior to transmission via the transceiver 12 to the receiver device 40.

Since the local audio signal of the transmission unit which operates in the chained-talker role undergoes an additional encoding/decoding step compared to the local audio signal of the transmission device operating in the mixer role, in the example of Figs. 1 and 3 the local audio signal captured by the transmission device 20 will be received by the receiver device 40 with a higher delay (typically one additional processing frame of, for example, 4 ms) compared to the local audio signal captured by the transmission device 10. Typically, to avoid problems with lip-reading, the audio delay should be kept below 20 ms, which requirement is more challenging to be fulfilled for the transmission device operating in the chained-talker rote. Further, the additional encoding/decoding step adds additional noise of about 3 dB to the audio signal of the transmission device operating in the chained-talker role.

As a consequence, the local audio signal captured by the transmission device operating in the mixer role will be received with higher quality at the receiver device 40 than the local audio signal captured by the transmission device operating in the chained-talker role. Therefore, it is desirable to capture the most important audio signal by a transmission device which operates in the mixer role. To this end, a dynamic assignment of the mixer role is desirable.

In some implementations, the transmission devices, to achieve such dynamic assignment, are evaluated based on an analysis of the captured audio signals, wherein the mixer role is dynamically assigned to the transmission device which is considered to have the local audio signals which are most important. The local audio signals may be analyzed by applying voice activity detection to the local audio signal captured by the respective transmission device, such as by the VAD 53. The chained-talker mode may be assigned to transmission devices only for which voice activity is presently being detected. The mixer role may be assigned to the most recent transmission device for which voice activity has been detected and still is being detected. For transmission devices for which no voice activity is presently being detected, the chained-talker role and the mixer role may be disabled. In other words, only those transmission devices for which voice activity is detected are allowed to transmit their audio signals.

By assigning the mixer role to the most recent transmission device for which voice activity has been detected and still is being detected, that local audio signal which is typically the most important one in a discussion, namely the audio signal from the latest speaker, can be transmitted at the best available audio quality.

In some implementations the role assignment may be controlled by a designated master device, acting as, or including, a control unit for role assigment. In this case, one of the transmission devices or receiver devices acts as a master which decides on the role assignments (i.e., which role is to be assigned to which device at a given point in time). For example, the multiple transmission devices may transmit their network request under the form of a "voice activity detection" flag (which is representative of the voice activity in the locally captured audio signal of the respective device) to the master device. Then, the master device decides on the role assignment and sends, for example through a beacon slot, the addresses of the devices which are assigned to mixer role and the chained-talker role.

In practice, it may be desirable to implement a transition period before the transmission device for which voice activity is newly detected actually assumes the mixer mode. The transition period starts at the point in time at which detection of voice activity has started for that transmission device). During the transition period that transmission device assumes the chained-talker role and the transmission device which had been assigned the mixer role before remains in the mixer role. In other words, a certain delay is introduced before the transmission device, after voice activity has been newly detected, actually switches to the mixer role.

This functionality may be described by following rules:

(1) As long as for a first transmission device in the chained-talker role and for a second transmission device in the mixer role voice activity is continuously being detected, with no new voice activity being detected for a third transmission device, there will be no role change.

(2) If for a first transmission device in the chained-talker role voice activity detection stops, while for a second transmission device in the mixer role voice activity is continuously being detected and new voice activity is detected for a third transmission device, first the third transmission device will be assigned the chained-talker role and then, after the transition period, the third transmission device will take the mixer role form the second transmission device which then will be assigned the chained-talker role.

(3) If for a first transmission device in the chained-talker role voice activity is continuously being detected, while for a second transmission device in the mixer role voice activity detection stops and new voice activity is detected for a third transmission device, first the third transmission device will be assigned the chained-talker role and the mixer role will be transferred form the second transmission device to the first transmission device, and then, after the transition period, the third transmission device will take the mixer role from the first transmission device which then will be assigned the chained-talker role.

An example of rule (3) is illustrated in Fig. 5, wherein an example is shown in which a first transmission device 10 is initially in the mixing role while a second transmission device 20 is in the chained-talker role. At a time $T_1$ the voice activity at the first transmission device 10 stops (so that the VAD 53 detects at $T_1$ that there is no longer a voice activity), whereupon the mixer role is transferred from the first transmission device 10 to the second transmission device 20, for which voice activity continues, (at $T_1$ the second transmission device 20 is the only - and therefore also the most recent - transmission device for which voice activity is being detected). For this role change no transition period is applied, since at $T_1$ the second transmission device 20 is the only transmission device for which voice activity is being detected. In this case, the fact that the second transmission device 20 operates in the mixer role only means that the second transmission device 20 transmits its captured local audio signal directly, i.e. via its transceiver 12 and the link 18, to the receiver device 40, while there is no mixing with a remote audio signal received from another transmission device.

At the time $T_2$ voice activity is newly detected for a third transmission device 30. Since in this case for the second transmission device 20 voice activity still is being detected, a transition period is applied for the role switching, which transition period terminates at time $T_s$. While voice activity is detected for the third transmission device 30 already at time $T_2$, the role switching resulting from the newly detected voice activity is delayed by the transition period which terminates at time $T_s$, at which time the third transmission device 30 is assigned the mixer role, while the second transmission device 20 again is assigned the chained-talker role and transmits its local audio signal to the third transmission device 30 for mixing with the local audio signal captured by the third transmission device 30.

The duration of the transition period may be determined based on a dynamic analysis/classification of the local audio signal captured by the transmission device for which voice activity is newly detected(which is the third transmission device 30 in the example of Fig. 5) and the local audio signal captured by the transmission device which had the mixer role before (which is the second transmission device 20 in the example of Fig. 5). Such dynamic analysis/classification may include noise analysis, In particular, the dynamic analysis of the audio signals may include a classification into the classes "noise", "transient" and "tonal" (see Fig. 6).

According to one example, the class "noise" may be defined by applying an autocorrelation function which, according to one example, may be defined as follows:

$$F_{AC} = \frac{\frac{1}{N}\sum_N STA\left(X \cdot \left(\overline{X \cdot z^{-4}}\right)\right)}{\frac{1}{N}\sum_N \sqrt{STA\left(|X|^2\right) \cdot STA\left(|X \cdot z^{-4}|^2\right)}}$$

wherein X is the spectrum vector, "STA" is a short-term average and $z^{-4}$ designates a shift by 4 frames. The classifier decides that the signal is noise if the value of the autocorrelation function is above a given threshold (see Fig. 6).

The class "transient" may be defined by a transient function, such as the following function:

$$F_{Trans} = DSA \left( 10 \log_{10} \frac{1}{N} \sum_N \left( |X|^2 \right) - 10 \log_{10} \frac{1}{N} \sum_N \left( |X \cdot z^{-4}|^2 \right) \right)$$

wherein "DSA" means dual slope average. The classifier decides that the signal is "transient" if the value of this transient function is above a given threshold (see Fig. 6). The classifier decides that the signal is "tonal" if both the value of the autocorrelation function and the value of the transient function is below the respective thresholds.

The "tonal" versus "noise" distinction also could be achieved, for example, by using a SNR (signal to noise ratio) measurement rather than using an autocorrelation function.

The transition period may be terminated once both the local audio signal captured by the transmission device for which voice activity is newly detected (which is the third transmission device 30 in the example of Fig. 5) and the local audio signal captured by the transmission device which had the mixer role before (which is the second transmission device 20 in the example of Fig. 5) are classified as "noise".

By performing the role switch under "noisy" acoustic conditions, the audibility of audio artefacts potentially created by a role switch can be reduced (in a normal conversation, the speaker typically changes every 3 to 5 sec, which results in an audio transmission device role switch every 3 to 5 sec, so that a transmission device role switch is a frequent event).

As already mentioned above, the audio encoder 50 of each transmission device comprises a first encoding instance 51 and a second encoding instance 52 parallel to the first instance 51. When the transmission device operates in the mixer role, one of the instances is used for encoding the mixed audio signals which are to be transmitted via the transceiver 12 to the receiver device 40 while the other instance is used for decoding the remote audio signals received via the receiver 14 from a transmission device which operates in the chained-talker role. In the mixer role the received remote audio signal frame is decoded in the decoder instance 55 and is mixed in the mixer 16 with the most recent local audio frame captured by the microphone arrangement 11 of the transmission device which operates in the mixer role; the mixed audio signal then is encoded in the encoder instance 51 prior to transmission.

In the chained-talker role prior to time $T_s$ the second encoder instance 52 is used for encoding of the audio signal captured by the microphone 11 of the transmission unit prior to transmission via the transceiver 12 to the transmission device which is in the mixer mode.

Thus, the role switch also requires changes in the encoder/decoder state which may create audio artefacts. In order to minimize such audio artefacts, one may pre-run the other instance of the encoder/decoder towards the end of the chained-taiker role (namely, the instance which is not required for encoding of the captured audio signal prior to transmission to the transmission device which is in the mixing role), so as to prepare the role switching. The encoding instance 52 is used for encoding of the captured local audio signals in the chained-talker role, wherein the other encoding instance 51 is pre-run during the last frames of the chained-talker role. This allows to put the estimate of the signal level at a proper level when the transmission device switches from the chained-talker mode to the mixing mode. The pre-run encoded frames generated by the encoding instance 51 are not transmitted.

The encoder/decoder 50 may be, for example, of the G722 type.

Typically, the schedulers of the audio encoder/decoder 50 of the transmission device in the mixer role and the transmission device in the chained-talker role are not synchronized, so that the delay is minimal for both the mixer role and the chained talker role. This may result in the loss of some audio samples when the role switching occurs. Due to the change of the encoder/decoder states required for the switching from the chained-talker role to the mixer role of the transmission device 30 part of the audio samples in the last frame prior to role switching is lost (about 3 ms of the 4 ms frame). On the other hand, in the transmission device 20, which switches from the mixing role to the chained-talker role, some samples will be repeated, corresponding to a 3 ms delay increase (looking backward).

The mixing of the audio signals may include weighting of the audio signals.

The transmission devices may be configured to transmit stereo audio signals.

According to one example, the audio signal transmission chain may include more than two devices. While, as described so far, a transmission device A in the chained-talker role may transmit its captured local audio signal to a transmission device B in the mixing role which mixes the remote audio signal received from device A with its own captured local audio signal, the mixed audio signal may be transmitted to a receiver device which includes the functionality of a transmission device, so as to act as a transceiver device, which such transceiver device C capturing its own local audio signal and mixing it with the mixed signal received from transmission device B. The mixed audio signal then may be transmitted from device C to a further transceiver device, etc.

According to another example, the audio signal transmission chain ("daisy-chain") could be device dependent in the sense that one transceiver device mixes audio signals from devices A and B, while another transceiver device mixes audio signals from devices B and C.

As mentioned above, the G722 encoder/decoder may be pre-run in order to handle the two asynchronous audio chains of the chained-talker role and the mixer role; this implementation is appropriate in case that power consumption has to be minimized. According to another example, in case that power consumption is less critical, there may be two asynchronous audio chains which are completely or partly running simultaneously in a given transmission device, so that the transmission device can swap easily from one role phase to another. This would ease the phase swap as the device would be ready anytime to assume the mixer role or the chained-talker role.

**Claims**

1. A method of operating a multi-talker system comprising at least one audio signal receiver device (40) and a plurality of audio signal transmission devices (10, 20, 30), wherein each audio signal transmission device comprises an audio input (11) for capturing a local audio signal, and wherein each audio signal transmission device comprises

   a transceiver (12) for receiving a remote audio signal from at least one of the other audio signal transmission devices and for transmitting an audio signal to at least one of the other audio signal transmission devices or to one of the audio signal receiver devices, and
   a mixer (16) for mixing the received remote audio signal and the captured local audio signal to obtain a mixed audio signal,

   the method comprising:

   - assigning a mixer role to one of the audio signal transmission devices in which it receives a remote audio signal from at least one of the audio signal transmission devices, mixes the received remote audio signal with the captured local audio signal and transmits the mixed audio signal to the at least one audio signal receiver device; and
   - assigning a chained-talker role to one of the audio signal transmission devices in which it sends its captured local audio signal to the audio signal transmission device which is in the mixer role;

   **characterised in that** the mixer role and the chained-talker role are dynamically assigned depending on at least an analysis of the captured local audio signals.

2. The method of claim 1, wherein the analysis of the captured local audio signals comprises applying voice activity detection to the captured local audio signals.

3. The method of claim 2, wherein the chained-talker role is assigned to audio signal transmission devices for which voice activity is presently being detected.

4. The method of one of claims 2 and 3, wherein the mixer role is assigned to the most recent audio signal transmission device (10, 20, 30) for which voice activity has been detected and still is being detected.

5. The method of one of claims 2 to 4, wherein the chained-talker role and the mixer role are disabled for the audio signal transmission devices for which no voice activity is presently being detected.

6. The method of claim 4, wherein the mixer role is assigned to the audio signal transmission device (10, 20, 30) for which voice activity is newly detected after expiry of a transition period.

7. The method of claim 6, wherein during the transition period the chained-talker role is assigned to the audio signal transmission device for which voice activity is newly detected, and wherein during the transition period the audio signal transmission device (10, 20, 30) which had been assigned the mixer role before keeps the mixer role.

8. The method of claim 7, wherein the duration of the transition period is determined based on a classification of the audio signal captured by the audio signal transmission device (10, 20, 30) for which voice activity is newly detected at the starting point of the transition period and a classification of the audio signal captured by the audio signal transmission device (10, 20, 30) which remains in the mixer role during the transition period.

9. The method of claim 8, wherein said classification of the audio signals includes noise analysis and preferably includes a classification into the classes "noise", "transient" and "tonal", wherein the classification preferably uses a transient function for "transient" classification, and wherein the classification preferably uses an autocorrelation function or a signal to noise ratio measurement for "noise" classification.

10. The method of claim 9, wherein the transition period is terminated once both the audio signal captured by the audio signal transmission device (10, 20, 30) for which voice activity has been newly detected and the audio signal captured by the audio signal transmission device (10, 20, 30) which remains in the mixer role during the transition period are classified as "noise".

11. The method of one of the preceding claims, wherein the mixing of the audio signals includes weighting of the audio signals, and wherein the audio signal transmission devices (10, 20, 30) preferably are configured to transmit stereo audio signals.

12. The method of one of the preceding claims, wherein the audio input is a microphone arrangement (11) which is integrated within the respective audio signal transmission device or wherein the audio input is an interface for connecting a microphone arrangement to the respective audio signal transmission device (10, 20, 30) by a wired or wireless connection.

13. The method of one of the preceding claims, wherein at least one of the receiver devices (40) is configured as an audio signal transceiver device so as to also act as an audio signal transmission device (10, 20, 30) for transmitting the received remote audio signal and/or the local audio signal captured by that receiver device to another audio signal receiver device, wherein the audio signal transceiver device (10 20, 30, 40) preferably is configured to mix the received remote audio signal and the captured local audio signal and to transmit the mixed audio signal, and wherein preferably at least one of the audio signal transmission devices (10, 20, 30) and/or at least one of the audio signal receiver devices (40) is a hearing instrument.

14. A multi-talker system comprising
at least one audio signal receiver device (40), a plurality of audio signal transmission devices (10, 20, 30) and a control unit for controlling the audio signal transmission devices;
wherein each audio signal transmission device comprises

an audio input (11) for capturing local audio signals,
a transceiver (12) for receiving a remote audio signal from at least one of the other audio signal transmission devices and for transmitting at least one audio signal to at least one of the other audio signal transmission devices or to one of the audio signal receiver devices, and
a mixer (16) for mixing the received remote audio signal and the captured local audio signal to obtain a mixed audio signal;
wherein the control unit is configured to control the audio signal transmission devices in such a manner that a mixer role is assigned to one of the audio signal transmission devices in which it receives a remote audio signal from at least one of the audio signal transmission devices, mixes the received remote audio signal with the captured local audio signal and transmits the mixed audio signal to the at least one audio signal receiver device; and
a chained-talker role is assigned to one of the audio signal transmission devices in which it sends its captured local audio signal to the audio signal transmission device which is in the mixer role,
**characterised in that** the mixer role and the chained-talker role are dynamically assigned depending on at least an analysis of the captured local audio signals.

15. The system of claim 14, wherein the control unit is included in one of the audio signal transmission devices (10, 20, 30) or in one of the audio signal receiver devices (40).

**Patentansprüche**

1. Verfahren zum Betreiben eines Multisprechersystems mit mindestens einem Audiosignal-Empfängergerät (40) und einer Mehrzahl von Audiosignal-Sendegeräten (10, 20, 30), wobei jedes Audiosignal-Sendegerät einen Audioeingang (11) zum Auffangen eines lokalen Audiosignals aufweist, und wobei jedes Audiosignal-Sendegerät versehen ist mit

einem Sendeempfänger (12) zum Empfangen eines Fern-Audiosignals von mindestens einem der anderen Audiosignal-Sendegeräte sowie zum Senden eines Audiosignals an mindestens eines der anderen Audiosignal-Sendegeräte oder an eines der Audiosignal-Empfängergeräte, und

einem Mischer (16) zum Mischen des empfangenen Fern-Audiosignals und des aufgefangenen lokalen Audiosignals, um ein gemischtes Audiosignal zu erhalten,

wobei im Zuge des Verfahrens:

einem der Audiosignal-Sendegeräte eine Mischerrolle zugewiesen wird, in welcher es ein Fern-Audiosignal von mindestens einem der Audiosignal-Sendegeräte empfängt, das empfangene Fern-Audiosignal mit dem aufgefangenen lokalen Audiosignal mischt und das gemischte Audiosignal an das mindestens eine Audiosignal-Empfangsgerät sendet; und

einem anderen der Audiosignal-Sendegeräte eine Ketten-Sprecherrolle zugewiesen wird, in welcher es sein aufgefangenes lokales Audiosignal zu demjenigen Audiosignal-Sendegerät sendet, welches sich in der Mischerrolle befindet;

**dadurch gekennzeichnet, dass** die Mischerrolle und die Ketten-Sprecherrolle in Abhängigkeit von mindestens einer Analyse der aufgefangenen lokalen Audiosignale dynamisch zugewiesen werden.

2. Verfahren gemäß Anspruch 1, wobei bei der Analyse der aufgefangenen lokalen Audiosignale eine Stimmaktivitätserfassung auf die aufgefangenen lokalen Audiosignale angewendet wird.

3. Verfahren gemäß Anspruch 2, wobei die Ketten-Sprecherrolle Audiosignal-Sendegeräten zugewiesen wird, für welche momentan Stimmaktivität erfasst wird.

4. Verfahren gemäß einem der Ansprüche 2 oder 3, wobei die Mischerrolle demjenigen Audiosignal-Sendegerät (10, 20, 30) zugewiesen wird, für welches als letztes Stimmaktivität erfasst wurde und immer noch erfasst wird.

5. Verfahren gemäß einem der Ansprüche 2 bis 4, wobei die Ketten-Sprecherrolle und die Mischerrolle für Audiosignal-Sendegeräte deaktiviert werden, für welche momentan keine Stimmaktivität erfasst wird.

6. Verfahren gemäß Anspruch 4, wobei die Mischerrolle demjenigen Audiosignal-Sendegerät (10, 20, 30) zugewiesen wird, für welches nach dem Ende einer Übergangsperiode Stimmaktivität neu erfasst wird.

7. Verfahren gemäß Anspruch 6, wobei während der Übergangsperiode die Ketten-Sprecherrolle demjenigen Audiosignal-Sendegerät zugewiesen wird, für welches Stimmaktivität neu erfasst wird, und wobei während der Übergangsperiode dasjenige Audiosignal-Sendegerät (10, 20, 30), welchem zuvor die Mischerrolle zugewiesen wurde, die Mischerrolle beibehält.

8. Verfahren gemäß Anspruch 7, wobei die Dauer der Übergangsperiode basierend auf einer Klassifizierung des Audiosignals festgelegt wird, welches von demjenigen Audiosignal-Sendegerät (10, 20, 30) aufgefangen wurde, für welches am Startpunkt der Übergangsperiode Stimmaktivität neu erfasst wird, sowie basierend auf einer Klassifizierung des Audiosignals, welches von demjenigen Audiosignal-Sendegerät (10, 20, 30) aufgefangen wurde, welches während der Übergangsperiode in der Mischerrolle verbleibt.

9. Verfahren gemäß Anspruch 8, wobei die Klassifizierung der Audiosignale eine Rauschanalyse und vorzugsweise eine Klassifizierung in die Klassen "Rauschen", "Transient" und "Tonal" beinhaltet, wobei die Klassifizierung vorzugsweise eine transiente Funktion zur "Transient"-Klassifizierung verwendet, und wobei die Klassifizierung für die "Rauschen"-Klassifizierung vorzugsweise eine Autokorrelationsfunktion oder eine Signal-Rausch-Verhältnis-Messung verwendet.

10. Verfahren gemäß Anspruch 9, wobei die Übergangsperiode beendet wird, sobald sowo hl das von demjenigen Audiosignal-Sendegerät (10, 20, 30) aufgefangene Audiosignal, für welches Stimmaktivität neu erfasst wurde, als auch das Audiosignal, welches von demjenigen Audiosignal-Sendegerät (10, 20, 30) aufgefangen wurde, welches während der Übergangsperiode in der Mischerrolle verbleibt, als "Rauschen" klassifiziert werden.

11. Verfahren gemäß einem der vorhergehenden Ansprüche, wobei beim Mischen der Audiosignale die Audiosignale gewichtet werden, und wobei die Audiosignal-Sendegeräte (10, 20, 30) vorzugsweise zum Senden von Stereo-Audiosignalen ausgebildet sind.

12. Verfahren gemäß einem der vorhergehenden Ansprüche, wobei es sich bei dem Audioeingang um eine Mikrofonanordnung (11) handelt, die in dem jeweiligen Audiosignal-Sendegerät integriert ist, oder wobei es sich bei dem Audioeingang um eine Schnittstelle zum Verbinden einer Mikrofonanordnung mit dem jeweiligen Audiosignal-Sendegerät (10, 20, 30) über eine drahtgebundene oder drahtlose Verbindung handelt.

13. Verfahren gemäß einem der vorhergehenden Ansprüche, wobei mindestens eines der Empfängergeräte (40) als ein Audiosignal-Sendeempfängergerät ausgebildet ist, um als ein Audiosignal-Sendegerät (10, 20, 30) zum Senden des empfangenen Fern-Audiosignals und/oder des von dem Empfängergerät aufgefangenen lokalen Audiosignals zu einem anderen Audiosignal-Empfängergerät zu wirken, wobei das Audiosignal-Sendeempfängergerät (10, 20, 30, 40) vorzugsweise ausgebildet ist, um das empfangene Fern-Audiosignal und das aufgefangene lokale Audiosignal zu mischen und das gemischte Audiosignal zu senden, und wobei vorzugsweise mindestens eines der Audiosignal-Sendegeräte (10, 20, 30) und/oder mindestens eines der Audiosignal-Empfängergeräte (40) eine Hörvorrichtung ist.

14. Multisprechersystem mit
mindestens einem Audiosignal-Empfängergerät (40), einer Mehrzahl von Audiosignal-Sendegeräten (10, 20, 30) sowie einer Steuereinheit zum Steuern der Audiosignal-Sendegeräte;
wobei jedes Audiosignal-Sendegerät versehen ist mit

einem Audioeingang (11) zum Auffangen von lokalen Audiosignalen,
einem Sendeempfänger (12) zum Empfangen eines Fern-Audiosignals von mindestens einem der anderen Audiosignal-Sendegeräte und zum Senden mindestens eines Audiosignals an mindestens eines der anderen Audiosignal-Sendegeräte oder an eines der Audiosignal-Empfängergeräte, und
einem Mischer (16) zum Mischen des empfangenen Fern-Audiosignals und des aufgefangenen lokalen Audiosignals, um ein gemischtes Audiosignal zu erhalten;
wobei die Steuereinheit ausgebildet ist, um die Audiosignal-Sendegeräte so zu steuern, dass
eine Mischerrolle einem der Audiosignal-Sendegeräte zugewiesen wird, in welcher es ein Fern-Audiosignal von mindestens einem der Audiosignal-Sendegeräte empfängt, das empfangene Fern-Audiosignal mit dem aufgefangenen lokalen Audiosignal mischt und das gemischte Audiosignal zu dem mindestens einen Audiosignal-Empfängergerät sendet; und
eine Ketten-Sprecherrolle mindestens einem der Audiosignal-Sendegeräte zugewiesen wird, in welcher es sein aufgefangenes lokales Audiosignal zu demjenigen Audiosignal-Sendegerät sendet, welches sich in der Mischerrolle befindet,

**dadurch gekennzeichnet, dass** die Mischerrolle und die Ketten-Sprecherrolle in Abhängigkeit von mindestens einer Analyse der aufgefangenen lokalen Audiosignale dynamisch zugewiesen werden.

15. System gemäß Anspruch 14, wobei die Steuereinheit in einem der Audiosignal-Sendegeräte (10, 20, 30) oder in einem der Audiosignal-Empfängergeräte (40) vorgesehen ist.

**Revendications**

1. Procédé d'exploitation d'un système multi-locuteurs comprenant au moins un dispositif récepteur de signal audio (40) et une pluralité de dispositifs émetteurs de signaux audio (10, 20, 30), chaque dispositif émetteur de signal audio comprenant une entrée audio (11) pour capturer un signal audio local, et chaque dispositif émetteur de signal audio comprenant
un émetteur-récepteur (12) destiné à recevoir un signal audio distant à partir d'au moins un des autres dispositifs émetteurs de signaux audio à distance et à émettre un signal audio vers au moins un des autres dispositifs émetteurs de signaux audio ou vers un des dispositifs récepteurs de signaux audio,
un mélangeur (16) pour mélanger le signal audio distant reçu et le signal audio local capturé pour obtenir un signal audio mélangé,
le procédé comprenant :

- l'attribution d'un rôle de mélangeur à un des dispositifs émetteurs de signaux audio dans lequel il reçoit un signal auto distant à partir d'au moins un des dispositifs émetteurs de signaux audio, mélange le signal audio distant reçu avec le signal audio local capturé et émet le signal audio mélangé vers l'au moins un dispositif récepteur de signal audio ; et
- l'attribution d'un rôle de locuteur à la chaîne à l'un des dispositifs émetteurs de signaux audio dans lequel il envoie son signal audio local capturé au dispositif émetteur de signal audio qui a le rôle de mélangeur ;

**caractérisé en ce que**
le rôle de mélangeur et le rôle de locuteur à la chaîne sont attribués dynamiquement en fonction au moins d'une analyse des signaux audio locaux capturés.

2. Procédé selon la revendication 1, dans lequel l'analyse des signaux audio locaux capturés comprend l'application d'une détection d'activité locale aux signaux audio locaux capturés.

3. Procédé selon la revendication 2, dans lequel le rôle de locuteur à la chaîne est attribué à des dispositifs émetteurs de signaux audio pour lesquels une activité vocale est présentement détectée.

4. Procédé selon l'une des revendications 2 et 3, dans lequel le rôle de mélangeur est attribué au dispositif émetteur de signal audio le plus récent (10, 20, 30) pour lequel une activité vocale a été détectée et est toujours détectée.

5. Procédé selon l'une des revendications 2 à 4, dans lequel le rôle de locuteur à la chaîne et le rôle de mélangeur sont désactivés pour les dispositifs émetteurs de signaux audio pour lesquels aucune activité locale n'est présentement détectée.

6. Procédé selon la revendication 4, dans lequel le rôle de mélangeur est attribué au dispositif émetteur de signal audio (10, 20, 30) pour lequel une activité vocale est nouvellement détectée après l'expiration d'une période de transition.

7. Procédé selon la revendication 6, dans lequel durant la période de transition le rôle de locuteur à la chaîne est attribué au dispositif émetteur de signal audio pour lequel une activité locale est nouvellement détectée, et dans lequel durant la période de transition le dispositif d'émetteur de signal audio (10, 20, 30) auquel a été attribué le rôle de mélangeur précédemment conserve le rôle de mélangeur.

8. Procédé selon la revendication 7, dans lequel la durée de la période de transition est déterminée en fonction d'une classification du signal audio capturé par le dispositif émetteur de signal audio (10, 20, 30) pour lequel une activité vocale est nouvellement détectée au point de départ de la période de transition et d'une classification du signal audio capturé par le dispositif émetteur de signal audio (10, 20, 30) qui demeure dans l'état de mélangeur durant la période de transition.

9. Procédé selon la revendication 8, dans lequel la classification des signaux audio comporte une analyse de bruit et comporte de préférence une classification dans les classes "bruit", "effet transitoire" et "tonal", la classification utilisant de préférence une fonction transitoire pour la classification "effet transitoire", et la classification utilisant de préférence une fonction d'autocorrélation ou une mesure de rapport signal/bruit pour la classification "bruit".

10. Procédé selon la revendication 9, dans lequel la période de transition prend fin une fois que le signal audio capturé par le dispositif émetteur de signal audio (10, 20, 30) pour lequel une activité vocale a été nouvellement détectée et le signal audio capturé par le dispositif émetteur de signal audio (10, 20, 30) qui reste dans le rôle de mélangeur durant la période de transition sont tous les deux classifiés en tant que "bruit".

11. Procédé selon l'une des revendications précédentes, dans lequel le mélange des signaux audio comporte une pondération des signaux audio, et dans lequel les dispositifs émetteurs de signaux audio (10, 20, 30) sont de préférence configurés pour émettre des signaux audio stéréo.

12. Procédé selon l'une des revendications précédentes, dans lequel l'entrée audio est un agencement de microphone (11) qui est intégré dans le dispositif émetteur de signal audio respectif ou dans lequel l'entrée audio est une interface pour connecter un agencement de microphone au dispositif émetteur de signal audio respectif (10, 20, 30) par une connexion filaire ou sans fil.

13. Procédé selon l'une des revendications précédentes, dans lequel au moins un des dispositifs récepteurs (40) est configuré en tant que dispositif émetteur-récepteur de signal audio de manière a également faire office de dispositif émetteur de signal audio (10, 20, 30) pour émettre le signal audio distant reçu et/ou le signal audio local capturé par ce dispositif récepteur vers un autre dispositif récepteur de signal audio, le dispositif émetteur-récepteur de signal audio (10, 20, 30, 40) étant de préférence configuré pour mélanger le signal audio distant reçu et le signal audio local capturé et émettre le signal audio mélangé, et dans lequel de préférence au moins un des dispositifs émetteurs de signaux audio (10, 20, 30) et/ou au moins un des dispositifs récepteurs de signaux audio (40) est un instrument auditif.

14. Système multi-locuteurs comprenant
au moins un dispositif récepteur de signal audio (40), une pluralité de dispositifs émetteurs de signaux audio (10, 20, 30) et une unité de commande pour commander les dispositifs émetteurs de signaux audio ;
dans lequel chaque dispositif émetteur de signal audio comprend

une entrée audio (11) pour capturer des signaux audio locaux,
un émetteur-récepteur (12) pour recevoir un signal audio distant à partir d'au moins un des autres dispositifs émetteurs de signaux audio et pour émettre au moins un signal audio vers au moins un des autres dispositifs émetteurs de signaux audio et un des dispositifs récepteurs de signaux audio, et

un mélangeur (16) pour mélanger le signal audio distant reçu et le signal audio cal capturé pour obtenir un signal audio mélangé ;
dans lequel l'unité de commande est configurée pour commander les dispositifs émetteurs de signaux audio de telle sorte que
un rôle de mélangeur soit attribué à un des dispositifs émetteurs de signaux audio dans lequel il reçoit un signal audio distant à partir d'au moins un des dispositifs émetteurs de signaux audio, mélange le signal audio distant reçu avec le signal audio local capturé et émet le signal audio mélangé vers l'au moins un dispositif récepteur de signal audio ; et

- un rôle de locuteur à la chaîne soit attribué à l'un des dispositifs émetteurs de signaux audio dans lequel il envoie son signal audio local capturé au dispositif émetteur de signal audio qui a le rôle de mélangeur ;

**caractérisé en ce que**
le rôle de mélangeur et le rôle de locuteur à la chaîne sont attribués dynamiquement en fonction au moins d'une analyse des signaux audio locaux capturés.

15. Système selon la revendication 14, dans lequel l'unité de commande est incluse dans un des dispositifs émetteurs de signaux audio (10, 20, 30) ou dans un des dispositifs récepteurs de signaux audio (40).

**FIG. 1**

EP 3 609 169 B1

FIG. 2

FIG. 5

FIG. 6

FIG. 4

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008074350 A1
- US 20120314890 A1
- US 5966639 A
- US 9635482 B2
- US 20170235544 A1